# EUROPÄISCHE PATENTSCHRIFT

(11) **EP 0 784 162 B1**
(45) Veröffentlichungstag und Bekanntmachung des Hinweises auf die Patenterteilung: **05.09.2001**
(21) Anmeldenummer: 97100282.9
(22) Anmeldetag: 09.01.1997
(51) Int. Cl.: F16D 66/02, F16D 65/56

(54) **Verschleissüberwachungsvorrichtung für Bremsbeläge**
Brake pad wear indicator
Détecteur d'usure de garniture de frein

(30) Priorität: 11.01.1996 DE 19600819
(43) Veröffentlichungstag der Anmeldung: 16.07.1997
(73) Patentinhaber: PERROT BREMSEN GmbH, 68229 Mannheim (DE)
(72) Erfinder: Strauss, Wilfried, Dipl.-Ing., 69483 Wald-Michelbach (DE); Jäger, Hellmut, Dipl.-Ing., 68535 Edingen-Neckarhausen (DE); Haas, Gerhard, 69198 Schriesheim (DE); Wetzel, Günter, 68229 Mannheim (DE); Antony, Paul, Dipl.-Ing., 67550 Worms (DE)
(74) Vertreter: Patentanwälte Leinweber & Zimmermann

(56) Entgegenhaltungen:
- EP-A- 0 567 155
- WO-A-95/09991
- DE-A- 2 118 875

## Beschreibung

Die Erfindung betrifft eine Scheibenbremse, insbesondere eine Gleitsattelscheibenbremse, wobei die Scheibenbremse mit einer Verschleißüberwachungsvorrichtung folgendes aufweist:
ein Verschiebeteil zum Aufnehmen einer von einer Zuspannvorrichtung erzeugten Zuspannkraft und
mindestens eine entsprechend dem auftretenden Verschleiß längenverstellbare Übertragungseinrichtung zum Übertragen der Zuspannkraft von dem Verschiebeteil auf mindestens eine Bremsbacke, die bei Zuspannung gegen eine Bremsscheibe gedrückt wird,
wobei die Verschleißüberwachungsvorrichtung einen Sensor zum Erfassen des auf den Verschleiß zurückgehenden Verschiebeweges zweier Elemente gegeneinander aufweist.

Eine Scheibenbremse mit Verschleißüberwachungsvorrichtung der eingangs genannten Art ist beispielsweise aus der EP-A-0 567 155 bekannt. Dabei wird der Nachstellweg und mithin der Verschleiß über einen am Bremssattel befestigten Sensor ermittelt, der mittels eines Verschiebestiftes in eine die Übertragungseinrichtung darstellende Druckspindel eingreift. Es wird also die Abstandsänderung der Druckspindel gegenüber dem Bremssattel erfaßt. Da der Sensor am Sattel angebracht ist, kann das Ankoppeln zwischen den Bremsen- und den Sensorteilen erst dann erfolgen, wenn diese Teile in dem Bremssattel montiert sind. Eine Funktionsprobe der Verschleißsensierung kann vor dem Einbau nicht erfolgen. Das Gleiche gilt für eine Justierung bzw. für einen Abgleich der Stellung der Druckspindel gegenüber dem Sensorteil: Auch dies ist erst nach Einbau möglich, was Schwierigkeiten mit sich bringt.

Bei einer Gleitsattelscheibenbremse treten während der Zuspann- und Meßphase gegenläufige axiale Verschiebungen zwischen dem Bremssattel und damit dem daran befestigten Sensor und der Druckspindel auf. Diese gegenläufigen Verschiebungen müssen bei der Meßwerterfassung berücksichtigt werden.

Nach der EP-B-0 492 143 erfolgt die Verschleißermittlung mittels eines am Bremssattelende in einer Öffnung gelagerten Drehwinkelsensors, in den ein Teil einer Nachstelleinrichtung hineinragt. Bei einem Nachstellvorgang wird die Drehbewegung der Nachstelleinrichtung als Drehwinkelgeber für die Größe des Belagverschleißes benutzt. Auch bei dieser Lösung kann die Funktionskontrolle erst nach dem Einbau erfolgen.

Aus der WO 95/09991 ist eine Verschleißüberwachungsvorrichtung bekannt, deren Sensor mit einem Drehpotentiometer am Bremssattel gehaltert und mit einer Nachstellvorrichtung gekoppelt ist. Auch hier wird eine Drehbewegung eines Nachstellteils erst im eingebauten Zustand abgegriffen.

Aufgabe der Erfindung ist es, eine Scheibenbremse mit Verschleißüberwachungsvorrichtung anzugeben, die einen Funktionstest ermöglicht und bei der eine Grundeinstellung zwischen der Übertragungseinrichtung und dem Sensor auf einfache Art und Weise vorgenommen werden kann, insbesondere ohne daß dafür ein Einbau in die Bremse erforderlich wäre. Ferner soll die Verschleißüberwachungsvorrichtung unempfindlich gegen Lage- und Toleranzabweichungen zwischen der Bremse und dem Verschiebeteil sowie der Übertragungseinrichtung sein, und der Zusammenbau soll einfach sein. Im Falle einer Sattelscheibenbremse soll die Verschleißüberwachungsvorrichtung darüber hinaus unempfindlich gegenüber Bremssattelschwingungen und gegenläufigen Verschieberichtungen sein.

Erfindungsgemäß wird die gestellte Aufgabe dadurch gelöst, daß der Sensor an dem Verschiebeteil und/oder der Übertragungseinrichtung angebracht ist und den auf den Verschleiß zurückgehenden Verschiebeweg zwischen dem Verschiebeteil und der Übertragungseinrichtung erfaßt.

Da der Sensor an dem Verschiebeteil und/oder der Übertragungseinrichtung angebracht ist und den auf den Verschleiß zurückgehenden Verschiebeweg zwischen den beiden genannten Elementen erfaßt, kann er als einheitliche Baugruppe zusammen mit dem Verschiebeteil und der Übertragungseinrichtung ausgelegt werden, was eine Justierung sowie einen Funktionstest ermöglicht, ohne daß ein Einbau der Baugruppe erforderlich wäre. Da der Sensor den auf den Verschleiß zurückgehenden Verschiebeweg zwischen dem Verschiebeteil und der Übertragungseinrichtung erfaßt, müssen nur hier entsprechende Toleranzen eingehalten werden. Andere Bremsenteile müssen die für die Verschleißüberwachung vorgegebenen Toleranzen nicht einhalten. Da die Anbringung des Sensors vor dem Einbau in die Bremse erfolgen kann, ist der Gesamtzusammenbau vereinfacht. Auch im Falle einer Gleitsattelscheibenbremse werden von dem Sensor keine gegenläufigen Verschiebungen erfaßt. Dadurch wird die Auswertung des Sensorsignals zum einen genauer und zum anderen einfacher.

Bei der längenverstellbaren Übertragungseinrichtung kann es sich erfindungsgemäß um eine Druckspindel handeln.

Nach einer bevorzugten Ausführungsform weist der Sensor ein an dem Verschiebeteil angebrachtes Drehpotentiometer sowie eine mit dem Drehpotentiometer in Wirkverbindung stehende Stange auf, die in Axialrichtung der Druckspindel mit der Druckspindel gekoppelt, jedoch bezüglich einer Drehung der Druckspindel von der Druckspindel entkoppelt ist.

Die Stange kann eine Zahnstange sein, wobei das Drehpotentiometer ein Zahnrad aufweist.

Die Stange kann auch an einem Reibrad an dem Drehpotentiometer anliegen. Bei dem Reibrad handelt es sich bevorzugt um ein Kegelrad.

Insbesondere im Falle einer Reibverbindung zwischen der Stange und dem Drehpotentiometer ist bevorzugt eine Vorspanneinrichtung zum Vorspannen der Stange und des Drehpotentiometers gegeneinander vorgesehen.

Insbesondere zum Zwecke der Justierung kann der Sensor erfindungsgemäß von der Stange entkoppelbar sein.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: einen zur Bremscheibenebene senkrechten Schnitt durch eine zweispindlige Gleitsattelscheibenbremse mit Verschleißüberwachungsvorrichtung nach einer Ausführungsform der Erfindung,
- Fig. 2: ebenfalls einen zur Bremsscheibenebene senkrechten, jedoch auch zu dem Schnitt nach Fig. 1 senkrechten Schnitt durch die Scheibenbremse nach Fig. 1,
- Fig. 3: eine teilweise geschnittene Ansicht der Scheibenbremse nach Fig. 1 in Richtung der Bremsscheibenachse,
- Fig. 4: eine schematische Darstellung eines weiteren Ausführungsbeispiels der Verschleißüberwachungsvorrichtung,
- Fig. 5: eine weitere Ansicht der Verschleißüberwachungsvorrichtung nach Fig. 4, jedoch senkrecht zu der Blickrichtung nach Fig. 4,
- Fig. 6: eine schematische Darstellung einer Alternativausführung der Verschleißüberwachungsvorrichtung nach Fig. 4,
- Fig. 7: einen zur Bremsscheibenebene senkrechten Schnitt durch eine einspindelige Scheibenbremse mit Verschleißüberwachungsvorrichtung nach einem weiteren Ausführungsbeispiel der Erfindung.

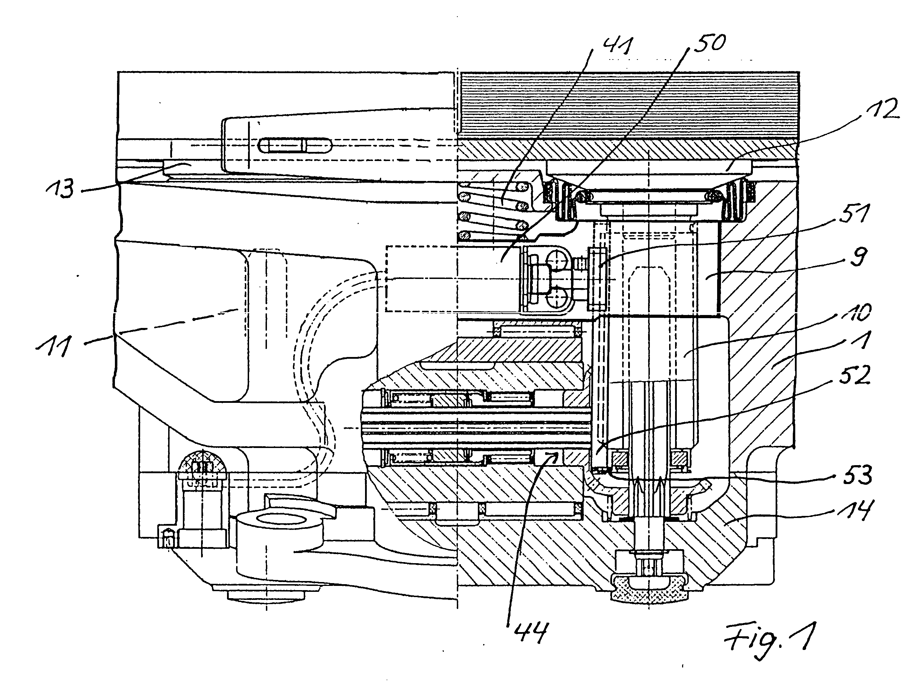

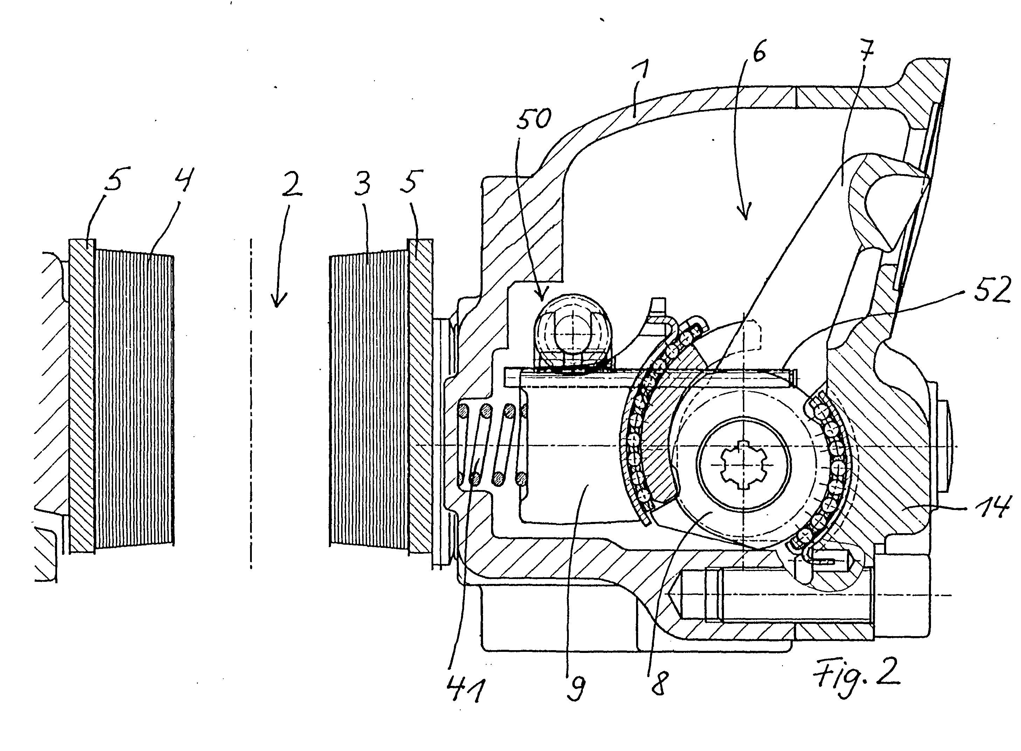

Nach den Figuren 1 bis 3 und 7 weist die Scheibenbremse einen Bremssattel 1 auf, der in üblicher Weise mit seinen beiden Schenkeln eine Bremsscheibe 2 übergreift. Beidseitig der Bremsscheibe 2 sind Bremsbeläge 3, 4 an Belagträgern 5 in einem nicht dargestellten Bremsenträger bzw. im Bremssattel 1 geführt und abgestützt. In ebenfalls nicht dargestellter Weise ist der Bremssattel 1 mit Hilfe von Führungselementen quer zur Bremsscheibe 2 verschieblich gelagert. Der Bremssattel 1 weist einseitig eine Zuspannvorrichtung 6 zur Beaufschlagung der Bremse auf.

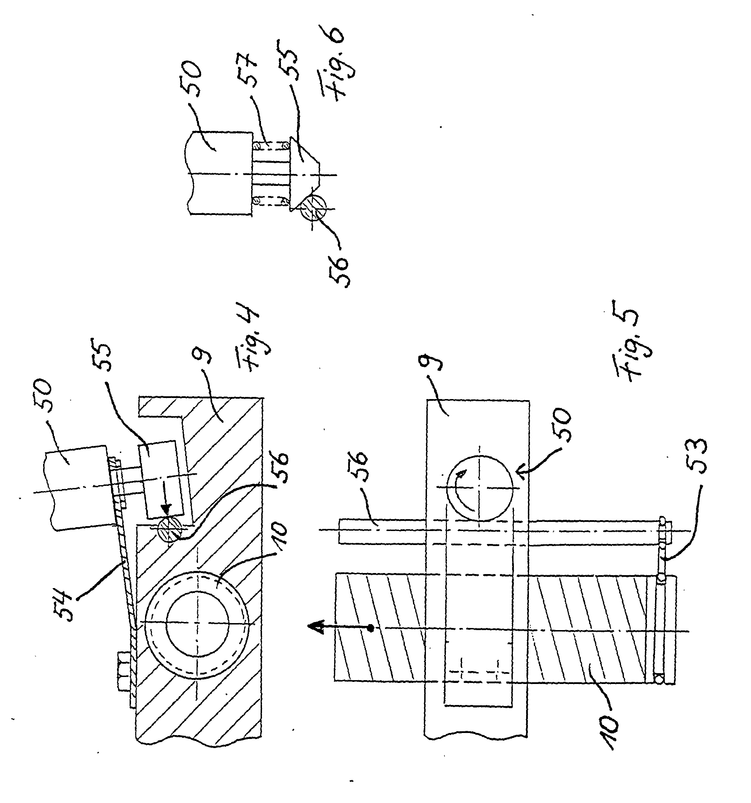

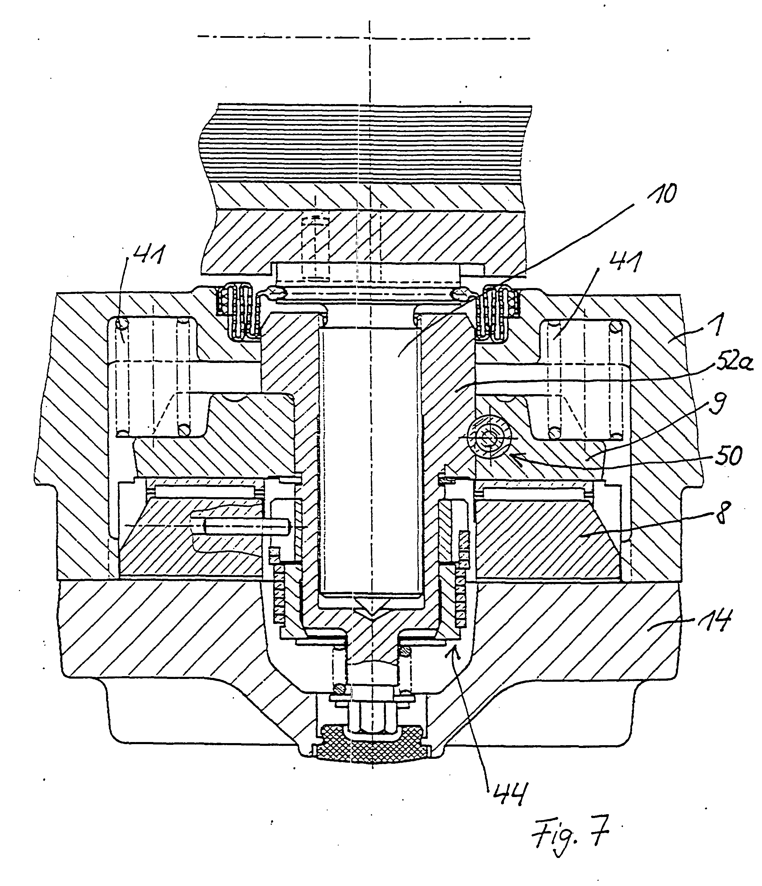

Die Zuspannvorrichtung 6 besteht im wesentlichen aus einem Bremshebel 7, der mit einer parallel zur Bremsscheibenebene angeordneten Zuspannwelle 8 verbunden ist, und einem im Bremssattel 1 geführten und abgestützten als Druckstück 9 ausgeführten Verschiebeteil, in das beidseitig eine (Fig. 7) bzw. 2 (Fig. 1 bis 3) Druckspindeln 10 bzw. 11 eingeschraubt sind. Zur Bremsscheibe 2 hin weisen die Druckspindeln jeweils einen Druckstempel 12 bzw. 13 auf.

Am Bremssattel 1 ist ein Deckel 14 befestigt, an dem ein Bremszylinder angebracht ist, und zwischen dem Bremssattel und dem Druckstück 9 ist mindestens eine Druckfeder 41 angeordnet, die die Bremsenteile gegeneinander verspannt.

Zur Steuerung einer gleichmäßigen Nachstellung der Druckspindel(n) 10 bzw. 11 ist innerhalb der Bremse eine Nachstellvorrichtung 44 mit der Zuspannwelle 8 gekoppelt.

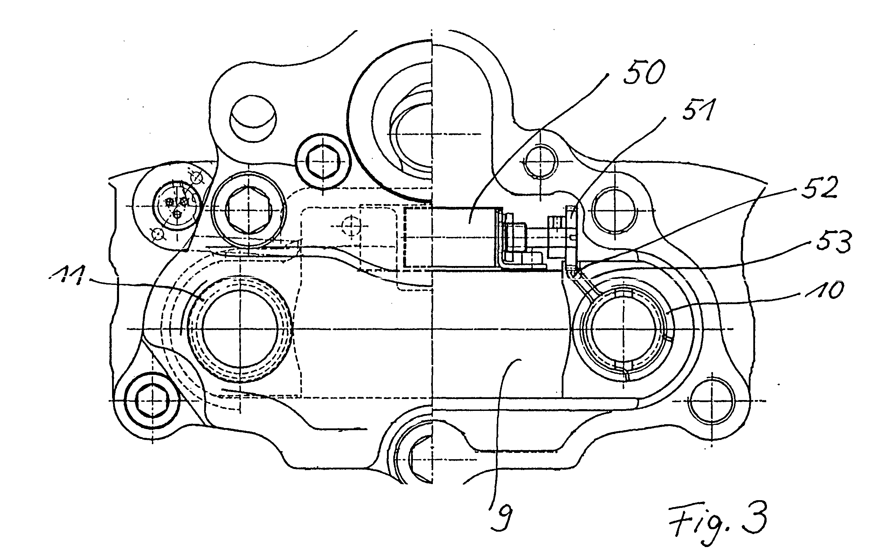

Bei der Ausführungsform nach den Fig. 1 bis 3 ist auf dem Druckstück 9 ein Verschleißsensor 50 befestigt, der in Richtung Druckspindel ein Zahnrad 51 aufweist. Innerhalb des Druckstücks ist beispielsweise in einer Durchgangsöffnung eine als Verbindungsteil dienende Zahnstange 52 verschiebbar gelagert, die an einer Seite mit der Druckspindel 10 in Wirkverbindung steht. Die Halterung 53 koppelt die Zahnstange 52 mit der Druckspindel 10 bezüglich einer Bewegung in Axialrichtung der Druckspindel 10, jedoch besteht keine Kopplung bezüglich einer Drehung der Druckspindel 10. Wie insbesondere der Fig. 3 zu entnehmen ist, ist die Halterung 53 in Form eines die Druckspindel 10 umschließenden Rings ausgeführt, der in Axialrichtung mit der Druckspindel 10 gekoppelt ist, innerhalb dessen die Druckspindel jedoch frei drehen kann. Das Zahnrad 51 greift in die Zahnstange 52 ein.

Die in den Fig. 4 bis 6 gezeigten Ausführungsbeispiele entsprechen dem Ausführungsbeispiel nach den Fig. 1 bis 3, wobei jedoch die Zahnstange 52 durch eine ungezahnte Stange 56 ausgetauscht ist und anstelle des Zahnrades 51 ein Reibrad 55 vorgesehen ist. Wiederum steht die Stange 56 mittels der Halterung 53 mit der Druckspindel 10 in Wirkverbindung. Bei dem Reibrad 55 kann es sich um ein zylindrisches Reibrad handeln (Fig. 4) oder um ein Kegelrad (Fig. 6). Zum Vorspannen von Rad 51 bzw. 55 und Stange 52 bzw. 56 kann ein Federstahlblech 54 (Fig. 4) und/oder eine Druckfeder 57 (Fig. 6) vorgesehen. Durch diese Federvorspannungen können prinzipiell spielfreie Verbindungen zwischen den Kontaktteilen hergestellt werden.

Bei der Ausführungsform nach Fig. 7 weist die Bremse eine sogenannte Druckhülse 52a auf, die bezüglich der Kraftübertragung zwischen das Druckstück 9 und die Druckspindel 10 geschaltet ist. In diesem Fall kann der Sensor 50 an dem Druckstück 9 angebracht sein und die Verdrehung der Druckhülse 52a bezüglich des Druckstücks 9 über eine geeignete Wirkverbindung erfassen. Diese Wirkverbindung kann eine Verzahnung, eine Reibradverbindung oder dergleichen beinhalten. Da die Verdrehung der Druckhülse 52a ein Maß dafür ist, wie weit die Druckspindel 10 herausgeschraubt wird, nimmt auch in diesem Fall der Sensor 50 den auf den Verschleiß zurückgehenden Verschiebeweg zwischen der der Übertragungseinrichtung zugehörigen Druckspindel 10 und dem als Verschiebeteil dienenden Druckstück 9 auf.

In jedem Fall kann bei allen vorstehend beschriebenen Ausführungsformen die komplette Vormontage der Einzelteile außerhalb des Bremssattels erfolgen. Ebenso einfach wird die Grundeinstellung zwischen Druckspindel und Verschleißsensor vorgenommen, die beispielhaft am Ausführungsbeispiel nach den Fig. 4 bis 6 näher erläutert wird:

Nachdem die Druckspindel 10 in ihre Ausgangsstellung gedreht worden ist, wird der Verschleißsensor 50 gegen die Federwirkung angehoben, wodurch die Entkopplung von der Stange 52 bzw. 56 erfolgt. In dieser Position kann die Ausgangsstellung des Sensors 50 justiert werden. Wird der Sensor 50 anschließend wieder durch die Federkraft gegen die Stange 52 bzw. 56 gedrückt, befinden sich sowohl die Druckspindel 10 als auch der Sensor 50 in der Ausgangsstellung. Bereits in dieser Phase kann die Verschleißüberwachung auf ihre Funktionsfähigkeit getestet werden.

Erfolgt bei einem Bremsvorgang mittels der Nachstellvorrichtung 44 eine Korrektur der Verschleißnachstellung, so wird die axiale Wegzunahme der Druckspindel 10 gegenüber dem Druckstück 9 über das mit der Druckspindel 10 in Wirkverbindung stehende Verbindungsteil 52, 52a bzw. 56 auf das Antriebsrad 51, 55 in Form einer Drehbewegung übertragen und somit vom Sensor 50 als Maß für den Verschleiß aufgenommen.

### Bezugszeichenliste

- 1: Bremssattel
- 2: Bremsscheibe
- 3: Bremsbelag
- 4: Bremsbelag
- 5: Belagträger
- 6: Zuspannvorrichtung
- 7: Bremshebel
- 8: Zuspannwelle
- 9: Druckstück
- 10: Druckspindel
- 11: Druckspindel
- 12: Druckstempel
- 13: Druckstempel
- 14: Deckel
- 41: Druckfeder
- 44: Nachstellvorrichtung
- 50: Sensor
- 51: Zahnrad
- 52: Zahnstange
- 52a: Druckhülse
- 53: Halterung
- 54: Federstahlblech
- 55: Reibrad
- 56: Stange
- 57: Druckfeder

## Patentansprüche

1. Scheibenbremse, insbesondere Gleitsattelscheibenbremse mit einer Verschleißüberwachungsvorrichtung, wobei die Scheibenbremse folgendes aufweist::
ein Verschiebeteil (9) zum Aufnehmen einer von einer Zuspannvorrichtung (6) erzeugten Zuspannkraft und
mindestens eine entsprechend dem auftretenden Verschleiß längenverstellbare Übertragungseinrichtung (10, 11; 52a) zum Übertragen der Zuspannkraft von dem Verschiebeteil (9) auf mindestens eine Bremsbacke (3, 4), die bei Zuspannung gegen eine Bremsscheibe (2) gedrückt wird, wobei
die Verschleißüberwachungsvorrichtung einen Sensor (50) zum Erfassen des auf den Verschleiß zurückgehenden Verschiebeweges zweier Elemente gegeneinander aufweist,
**dadurch gekennzeichnet**, daß
der Sensor (50) an dem Verschiebeteil (9) und/oder der Übertragungseinrichtung (10, 11; 52a) angebracht ist und den auf den Verschleiß zurückgehenden Verschiebeweg zwischen dem Verschiebeteil (9) und der Übertragungseinrichtung (10, 11) erfaßt.

2. Scheibenbremse nach Anspruch 1, **dadurch gekennzeichnet**, daß die Übertragungseinrichtung (10, 11) eine Druckspindel ist.

3. Scheibenbremse nach Anspruch 2, **dadurch gekennzeichnet**, daß der Sensor (50) ein an dem Verschiebeteil (9) angebrachtes Drehpotentiometer sowie eine mit dem Drehpotentiometer in Wirkverbindung stehende Stange (52, 56) aufweist, die in Axialrichtung der Druckspindel (10, 11) mit der Druckspindel (10, 11) gekoppelt, jedoch bezüglich einer Drehung der Druckspindel (10, 11) von der Druckspindel (10, 11) entkoppelt ist.

4. Scheibenbremse nach Anspruch 3, **dadurch gekennzeichnet, daß** die Stange eine Zahnstange (52) ist und das Drehpotentiometer ein Zahnrad (51) aufweist.

5. Scheibenbremse nach Anspruch 3, **dadurch gekennzeichnet, daß** die Stange (56) an einem Reibrad (55) an dem Drehpotentiometer anliegt.

6. Scheibenbremse nach Anspruch 5, **dadurch gekennzeichnet, daß** das Reibrad (55) ein Kegelrad ist.

7. Scheibenbremse nach einem der Ansprüche 3 bis 6, gekennzeichnet durch eine Vorspanneinrichtung (54, 57) zum Vorspannen der Stange (52, 56) und des Drehpotentiometers gegeneinander.

8. Scheibenbremse nach einem der Ansprüche 3 bis 7, **dadurch gekennzeichnet, daß** der Sensor (50) von der Stange (52, 56) entkoppelbar ist.

## Claims

1. Disk Brake, especially a Floating Caliper Disk Brake with a pad wear indicating device, whereby the Disk Brake exhibits the following:
a floating component (9) to absorb the torque load generated by a clamping unit (6) and
a minimum of one clamping torque transfer unit (10, 11; 52a), incorporating a wear induced variable length adjustment, to transfer the clamping torque to a minimum of one brake pad (3, 4) which during the clamping process is forced against the brake disk (2), whereby
the wear indicating device incorporates a sensor (50) to register the travel distance of two elements against each other,
characterized by
the sensor (50) being attached to the floating component (9) and / or the torque transfer unit (10, 11; 52a) registering the wear induced travel distance between the floating component (9) and the torque transfer unit (10, 11).

2. Disk Brake according to claim 1, characterized by the torque transfer unit (10, 11) being a pressure screw.

3. Disc Brake according to claim 2, characterized by the Sensor (50), attached to the floating component (9), consists of a rotating potentiometer and a linkage (52, 56) which couples the pressure screw (10,11) in axial direction and disconnects when the pressure screw (10, 11) rotates one turn.

4. Disc Brake according to claim 3, characterized by the linkage being a toothed rack (52) and the potentiometer incorporating a sprocket (51).

5. Disc Brake according to claim 3, characterized by the linkage (56) contacting a friction wheel (55) of the rotating potentiometer.

6. Disc Brake according to claim 5, characterized by the friction wheel (55) being a conical wheel.

7. Disc Brake according to claims 3 to 6, characterized by a clamping unit (54, 57) to force the linkage (52, 56) and the rotating potentiometer against each other.

8. Disc Brake according to claims 3 to 7, characterized by the sensor (50) being detachable from the linkage (52, 56).

## Revendications

1. Frein à disque, en particulier frein à disque à étrier coulissant avec un dispositif de contrôle d'usure, lequel frein à disque comportant les éléments suivants:
une pièce coulissante (9) qui transmet une force d'application engendrée par un dispositif d'application (6) et
au moins un dispositif de transmission (10, 11; 52a) mobile longitudinalement en fonction de l'usure se manifestant, lequel dispositif transmet la force d'application de la pièce coulissante (9) vers au moins un segment de frein (3, 4) qui est pressée contre le disque de frein (2) lors de l'application, sachant que
le dispositif de contrôle d'usure comporte un capteur (50) qui mesure le déplacement relatif de deux éléments provoqué par l'usure,
**caractérisé en ce que**
le capteur (50) est placé sur la pièce coulissante (9) et/ou sur le dispositif de transmission (10, 11; 52a) et mesure le déplacement provoqué par l'usure entre la pièce coulissante (9) et le dispositif de transmission (10, 11).

2. Frein à disque selon la revendication 1, **caractérisé en ce que** le dispositif de transmission (10, 11) est un arbre de poussée.

3. Frein à disque selon la revendication 2, **caractérisé en ce que** le capteur (50) comporte un potentiomètre placé sur la pièce coulissante (9) ainsi qu'une tige (52, 56) reliée au potentiomètre, laquelle tige est couplée à l'arbre de poussée (10, 11) dans le sens de l'axe de l'arbre de poussée (10, 11) mais est découplée de l'arbre de poussée (10,11) par rapport à une rotation de l'arbre de poussée (10, 11).

4. Frein à disque selon la revendication 3, **caractérisé en ce que** la tige est une tige crantée (52) et que le potentiomètre présente une roue dentée (51).

5. Frein à disque selon la revendication 3, **caractérisé en ce que** la tige (56) repose sur une roue à friction (55) sur le potentiomètre.

6. Frein à disque selon la revendication 5, **caractérisé en ce que** la roue à friction (55) est une roue conique.

7. Frein à disque selon l'une quelconque des revendications 3 à 6, caractérisé par un dispositif de pré-tension (54, 57) pour précontraindre la tige (52, 56) et le potentiomètre l'un contre l'autre.

8. Frein à disque selon l'une quelconque des revendications 3 à 7, **caractérisé en ce que** la capteur (50) peut être découplé de la tige (52, 56).
